# EUROPEAN PATENT APPLICATION

(11) **EP 2 479 446 A2**
(43) Date of publication of application: **25.07.2012**
(21) Application number: 12150880.8
(22) Date of filing: 12.01.2012
(51) Int. Cl.: F16C 19/26, F16C 33/58, F16C 33/66

(54) **A bearing race for a rolling-element bearing**

(30) Priority: 25.01.2011 GB 201101226
(71) Applicant: Rolls-Royce plc, London SW1E 6AT (GB)
(72) Inventor: Ashmore, Daren Richard, Nottingham, NG9 1PY (GB); McNeil, Alastair, Derby, DE22 1EX (GB)
(74) Representative: Gee, Philip David

(57) **Abstract**

A bearing race (6) for a rolling-element bearing (2), the race (6) comprising: a circumferential channel which defines a raceway (14), wherein the raceway (14) comprises a base portion (16) and first and second side portions (18a,18b); and an oil scavenge passageway (22) extending through the race (6) from a boundary between the base portion (16) and the first and/or second side portions (18a,18b) of the raceway (14) to an external surface (28) of the race (6).

## Description

The present invention relates to a bearing race for a rolling-element bearing and particularly, but not exclusively, to a race with an improved oil scavenge route.

### Background

Bearings are widely used to couple a rotating component and a fixed component or to couple two rotating components.

A conventional rolling-element bearing comprises an annular inner race and an annular outer race. The outer race has a larger diameter than the inner race and the inner and outer races are concentrically arranged with the inner race disposed within the outer race.

The difference in diameter between the inner and outer races is such that the inner and outer races are spaced a distance apart. This gap between the inner and outer races is sufficient to receive a plurality of rolling elements. The rolling elements are typically balls or rollers (cylinders). Ball bearings can withstand both radial and axial forces, whereas roller bearings can withstand radial forces but are generally not designed to be loaded axially and allow some movement in an axial direction.

The rolling elements are located within openings in a circular cage. The rolling elements are spaced apart from one another by the cage and are allowed to rotate within the openings of the cage. The cage is disposed between the inner and outer races. Accordingly, the cage spaces the rolling elements around the circumference of the inner and outer races. The rolling elements contact surfaces of the inner and outer races, and the rotation of the rolling elements within the openings of the cage allow the inner and outer races to rotate relative to one another.

To retain the rolling elements within the bearing, a raceway (ie a channel) is formed in the inner and/or outer race. For a roller bearing, the raceway is defined by a pair of circumferential lips which are spaced axially from one another to provide the raceway there between. For a ball bearing, the raceway is defined by a hemispherical (or smaller) groove formed in the surface of the race which has a radius that is substantially equal to the radius of the balls.

A known roller bearing comprises an outer race having a raceway formed therein and an inner race having a plain flat surface. The raceway is formed so that, with the rollers and cage correctly positioned within the raceway, the inner race may be slid over the rollers to retain them within the bearing.

A film of oil is supplied to the components of the bearing to provide lubrication. The lubricating oil reduces friction and therefore reduces wear within the bearing. As a result of the friction between the various components of the bearing, and the shearing of the oil film, the temperature of the oil increases. To maintain an acceptably low oil temperature, the oil may be replenished. The used and heated oil is dispensed from the bearing into a bearing housing through a scavenge route. This "scavenge" oil is pumped out of the housing before being cooled and recycled back to the bearing.

The outer race described above compromises the scavenge route of the oil out of the bearing since it is necessary for the oil to overcome the lips which define the raceway and to pass through the gap between the cage and the lips.

The compromised scavenge route of the oil out of the bearing causes churning of the oil. Consequently, the temperature of the oil within the bearing is increased, resulting in a reduction in the minimum thickness of the oil film. The churning of the oil also increases the drag on the cage and thus causes cage slip. Furthermore, the compromised scavenge route increases the residence time of debris within the bearing and thus exposes the bearing to a higher risk of damage if any debris is passed through the bearing.

The present invention seeks to provide a bearing with an improved oil scavenge route which overcomes some or all of the problems described above.

### Statements of Invention

In accordance with an aspect of the invention there is provided a bearing race for a rolling-element bearing, the race comprising: a circumferential channel which defines a raceway, wherein the raceway comprises a base portion and first and second side portions; and an oil scavenge passageway extending through the race from a boundary between the base portion and the first and/or second side portions of the raceway to an external surface of the race.

The bearing race may further comprise a circumferential oil scavenge groove formed in the raceway and coupled to the oil scavenge passageway.

The oil scavenge passageway may provide an improved scavenge route for lubricating oil to exit the rolling-element bearing. Accordingly, heat generation from oil pooling and churning may be minimised. As a result, the minimum oil film thickness may be increased thus improving the bearing's tolerance to vibration. Furthermore, by reducing churning in the bearing, drag on the cage may be reduced. Consequently, cage slip may be reduced. The residence time of debris in the bearing may also be reduced, and any such debris may be channelled away from the rolling elements into the circumferential oil scavenge groove. Accordingly, the bearing race of the present invention may improve the reliability of the bearing.

The channel may be defined by first and second circumferential lips which project radially from a surface of the race and are spaced apart from one another, and the first and second side portions may be formed by interior surfaces of the first and second circumferential lips respectively.

The oil scavenge passageway may extend from the raceway to an external surface of the first and/or second circumferential lips.

The oil scavenge passageway may be a hole or slot.

The oil scavenge passageway may be substantially perpendicular to a radial axis of the race.

The oil scavenge passageway may be inclined relative to an axial direction of the race.

The oil scavenge passageway may be substantially perpendicular to a circumferential direction of the race.

The oil scavenge passageway may be at an oblique angle to a circumferential direction of the race.

The oil scavenge passageway may be angled towards an intended direction of motion of rolling elements of the bearing.

The intended direction of motion of the rolling elements may be substantially parallel to a flow of oil within the bearing. Consequently, the oil may enter the oil scavenge passageway more easily by angling the oil scavenge passageway towards this direction of motion.

The bearing race may comprise a plurality of oil scavenge passageways spaced around the circumference of the annular portion.

The bearing race may be an outer bearing race. Accordingly, the bearing race may use centrifugal forces to channel oil into and through the oil scavenge passageway.

In accordance with another aspect of the invention there is provided a rolling-element bearing comprising the bearing race as described.

The rolling-element bearing may be a roller bearing.

### Brief Description of the Drawings

For a better understanding of the present invention, and to show more clearly how it may be carried into effect, reference will now be made, by way of example, to the accompanying drawings, in which:
Figure 1 is an axial cross-sectional view of a rolling-element bearing having an outer race in accordance with an embodiment of the invention; and
Figure 2 is a circumferential section of the outer race.

### Detailed Description

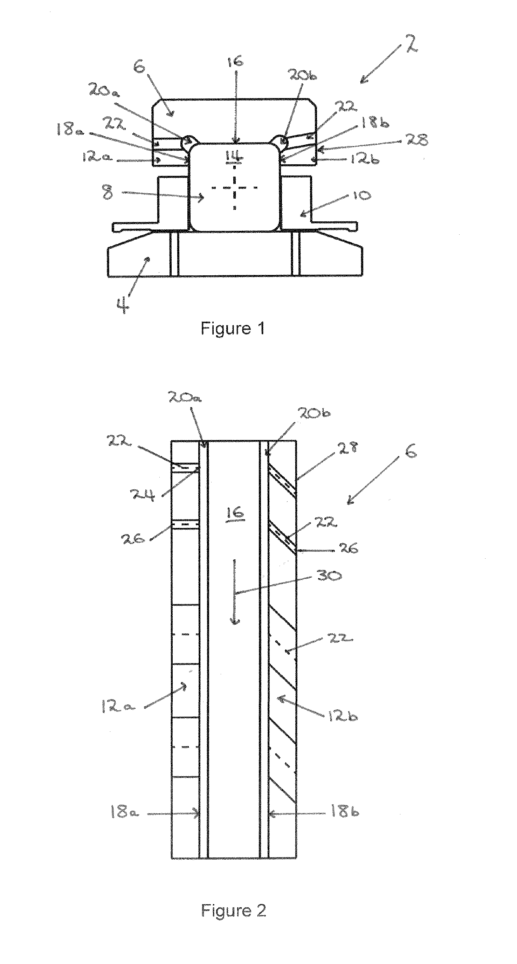

With reference to Figure 1, a rolling-element bearing 2 comprises an annular inner race 4 and an annular outer race 6. As described for a conventional bearing, the outer race 6 has a larger diameter than the inner race 4 and the inner and outer races 4, 6 are concentrically arranged with the inner race 4 disposed within the outer race 6.

A plurality of rolling elements 8 (in this case, cylindrical rollers) are disposed between the inner and outer races 4, 6. The rolling elements 8 are located within openings in a circular cage 10. The rolling elements 8 are spaced apart from one another by the cage 10 and are allowed to rotate within the openings of the cage 10. The cage 10 is disposed between the inner and outer races 4, 6. Accordingly, the cage 10 spaces the rolling elements 8 around the circumference of the inner and outer races 4, 6.

The outer race 6 comprises first and second circumferential lips 12a, 12b. The first and second circumferential lips 12a, 12b are spaced apart from one another at opposite sides of the outer race 6. Accordingly, the first and second circumferential lips 12a, 12b define a raceway 14 therebetween. The raceway 14 is a circumferential channel comprising a base portion 16 and first and second side portions 18a, 18b. The first and second side portions 18a, 18b are defined by inner surfaces of the first and second lips 12a, 12b respectively. The raceway 14 receives the rolling elements 8 and the side portions 18a, 18b retain the rolling elements 8 in an axial direction.

First and second circumferential grooves 20a, 20b are formed around the circumference of the raceway 14. The first and second circumferential grooves 20a, 20b are located at a boundary between the base portion 16 and the first and second side portions 18a, 18b respectively. The profile of the rolling elements 8 may be configured so as to prevent the rolling elements 8 from obstructing the circumferential grooves 20a, 20b.

A plurality of oil scavenge passageways 22 are formed in the outer race 6. Each oil scavenge passageway 22 has an opening 24 formed in the first or second circumferential groove 20a, 20b at the boundary between the base portion 16 and the first or second side portion 18a, 18b. The oil scavenge passageway 22 extends from the opening 24 to an opening 26 at an external surface 28 of the outer race 6. The external surface 28 is an external surface of the first or second circumferential lip 12a, 12b (i.e. opposite to the internal surface which defines the first or second side portion 18a, 18b of the raceway 14). The oil scavenge passageways 22 may be holes or slots. The geometry of the oil scavenge passageways 22 is selected so it does not affect the rolling contact operation of the bearing 2.

As shown in Figure 1, the oil scavenge passageways 22 may be perpendicular to a radial direction of the outer race 6 (see the oil scavenge passageway 22 formed in the first circumferential lip 12a). For example, the oil scavenge passageways 22 may be aligned with an axial direction of the outer race 6.

Alternatively, the oil scavenge passageways 22 may be inclined relative to the axial direction (see the oil scavenge passageway 22 formed in the second circumferential lip 12b). With this configuration, the oil scavenge passageways 22 are angled upwards away from the inner race 4, such that the opening 26 at the external surface 28 is further away from the inner race 4 than the opening 24 formed in the first or second circumferential groove 20a, 20b.

Furthermore, as shown in Figure 2, the oil scavenge passageways 22 may be perpendicular to a circumferential direction (see the oil scavenge passageways 22 formed in the first circumferential lip 12a). For example, the oil scavenge passageways 22 may be aligned with an axial direction of the outer race 6.

Alternatively, the oil scavenge passageways 22 may be at an oblique angle to the circumferential direction (see the oil scavenge passageways 22 formed in the second circumferential lip 12b). Particularly, it is advantageous for the oil scavenge passageways 22 to be angled towards the intended direction of motion of the rolling elements 8 around the bearing 2, which is indicated by the arrow 30. With this configuration, the oil scavenge passageways 22 are angled so that the opening 26 at the external surface 28 is further advanced in the direction of motion than the opening 24 formed in the first or second circumferential groove 20a, 20b.

As shown in Figures 1 and 2, the oil scavenge passageways 22 formed in the first circumferential lip 12a are aligned with an axial direction of the outer race 6 and the oil scavenge passageways 22 formed in the second circumferential lip 12b are inclined relative to the axial direction of the outer race 6 and are angled towards the direction of motion of the rolling elements 8. However, this need not be the case, and any combination of oil scavenge passageways may be used for the first and second circumferential lips 12a, 12b.

In use, the inner race 4 rotates relative to the outer race 6. This causes the rolling elements 8 to rotate both within the openings in the cage 10 and also around the circumference of the inner and outer races 4, 6 in the direction of the arrow 30. The bearing 2 is supplied with lubricating oil to reduce the friction between the rotating components of the bearing 2. The lubricating oil exits the bearing 2 through the oil scavenge passageways 22 via the first and second circumferential grooves 20a, 20b. The rotation of the rolling elements 8 forces the oil into the first and second circumferential grooves 20a, 20b. The first and second circumferential grooves 20a, 20b channel the oil to the oil scavenge passageways 22 where the oil is expelled from the bearing 2. The oil may then be cooled and recycled to the bearing 2 where it can again be used to lubricate the rotating components of the bearing 2.

The first and second circumferential grooves 20a, 20b and oil scavenge passageways 22 provide an improved scavenge route for the lubricating oil. Accordingly, heat generation from oil pooling and churning is minimised. As a result, the minimum oil film thickness may be increased thus improving the bearing's tolerance to vibration. Furthermore, by reducing churning in the bearing 2, drag on the cage and therefore cage slip may be reduced. The residence time of debris in the bearing 2 is also reduced, and any such debris is also channelled away from the rolling elements 8 into the first and second circumferential grooves 20a, 20b. Accordingly, the bearing race of the present invention may improve the reliability of the bearing 2.

Although the first and second circumferential grooves 20a, 20b and oil scavenge passageways 22 have been described as being located on the outer race 6, they could alternatively be located on the inner race 4.

Furthermore, the first and second circumferential grooves 20a, 20b need not extend around the whole circumference of the outer race 6. Instead, the first and second circumferential grooves 20a, 20b may extend around only a portion of the outer race 6 and/or may be divided into discrete sections. These sections may have an oil scavenge slot 22 at either end or midway along the section.

The opening 26 of the oil scavenge passageways 22 may be located in any external surface of the bearing race and this does not necessarily need to be an external surface of the first or second circumferential lip 12a, 12b. For example, where the oil scavenge passageways 22 are inclined relative to the axial direction of the bearing race, the opening 26 may no longer be located on an external surface of the first or second circumferential lip 12a, 12b.

The invention may be applied to any rolling-element bearing, particularly roller bearings. The invention may be particularly advantageous in hot, high speed and low load applications. For example, the invention may be used in a gas-turbine engine.

## Claims

1. A bearing race (6) for a rolling-element bearing (2), the race comprising:
a circumferential channel which defines a raceway (14), wherein the raceway comprises a base portion (16) and first and second side portions (18a, 18b); and
an oil scavenge passageway (22) extending through the race from a boundary between the base portion and the first and/or second side portions of the raceway to an external surface (28) of the race.

2. A bearing race as claimed in claim 1, further comprising a circumferential oil scavenge groove (20a, 20b) formed in the raceway and coupled to the oil scavenge passageway.

3. A bearing race as claimed in claim 1 or 2, wherein the channel is defined by first and second circumferential lips (12a, 12b) which project radially from a surface of the race and are spaced apart from one another, and wherein the first and second side portions are formed by interior surfaces of the first and second circumferential lips respectively.

4. A bearing race as claimed in claim 3, wherein the oil scavenge passageway extends from the raceway to an external surface of the first and/or second circumferential lips.

5. A bearing race as claimed in any of the preceding claims, wherein the oil scavenge passageway is a hole or slot.

6. A bearing race as claimed in any of the preceding claims, wherein the oil scavenge passageway is substantially perpendicular to a radial axis of the race.

7. A bearing race as claimed in any of claims 1 to 5, wherein the oil scavenge passageway is inclined relative to an axial direction of the race.

8. A bearing race as claimed in any of the preceding claims, wherein the oil scavenge passageway is substantially perpendicular to a circumferential direction of the race.

9. A bearing race as claimed in any of claims 1 to 7, wherein the oil scavenge passageway is at an oblique angle to a circumferential direction of the race.

10. A bearing race as claimed in claim 9, wherein the oil scavenge passageway is angled towards an intended direction of motion (30) of the rolling elements of the bearing.

11. A bearing race as claimed in any of the preceding claims, wherein the race comprises a plurality of oil scavenge passageways spaced around the circumference of the race.

12. A bearing race as claimed in any of the preceding claims, wherein the bearing race is an outer bearing race.

13. A rolling-element bearing comprising a bearing race as claimed in any of the preceding claims.

14. A rolling-element bearing as claimed in claim 13, wherein the rolling-element bearing is a roller bearing.
